# EUROPEAN PATENT APPLICATION

(11) **EP 4 668 911 A1**
(43) Date of publication of application: **24.12.2025**
(21) Application number: 24777652.9
(22) Date of filing: 06.03.2024
(51) Int. Cl.: H04W 56/00

(54) **PROCESSING METHOD AND APPARATUS FOR TIMING ADVANCE (TA)**

(30) Priority: 29.03.2023 CN 202310374214
(71) Applicant: Honor Device Co., Ltd., Shenzhen, Guangdong 518040 (CN)
(72) Inventor: YANG, Shutao, Shenzhen, Guangdong 518040 (CN); LIU, Dawei, Shenzhen, Guangdong 518040 (CN); SUN, Xiaoyu, Shenzhen, Guangdong 518040 (CN)
(74) Representative: Gill Jennings & Every LLP
(86) International application number: PCT/CN2024/080260
(87) International publication number: WO 2024/198862

(57) **Abstract**

Embodiments of this application provide a processing method for a time advance TA, and the method is applied to a terminal. The terminal is in a low-speed moving state. Low-speed moving includes moving with moving speed in a first speed range. The method includes: receiving a first message that is sent by a base station and that indicates a first TA; receiving, after the first message is received, a second message that is sent by the base station and that indicates a second TA; and in response to satisfying a first condition, sending an uplink signal by using the first TA to obtain an uplink transmission bit error rate satisfying a requirement. Satisfying the requirement includes: being less than a bit error rate threshold. The first condition includes: An absolute difference between the first TA and the second TA is greater than a difference threshold. Satisfying the first condition indicates that there is a possibility that the second TA is abnormal. Therefore, the first TA instead of the second TA is used to send uplink information, to obtain the uplink transmission bit error rate satisfying a requirement.

## Description

This application claims priority to Chinese Patent Application No. 2023103742144, filed with the China National Intellectual Property Administration on March 29, 2023 and entitled "PROCESSING METHOD FOR TIME ADVANCE TA AND APPARATUS", which is incorporated herein by reference in its entirety.

### TECHNICAL FIELD

This application relates to the field of communication technologies, and in particular, to a processing method for a time advance TA and an apparatus.

### BACKGROUND

. A timing advance (Timing Advance, TA) is a parameter configured by a base station to a terminal, to ensure that an uplink signal sent by the terminal is received within a receiving time of the uplink signal.
There is room for improvement in an existing TA mechanism.

### SUMMARY

This application provides a processing method for a time advance TA and an apparatus, to resolve a problem of how to improve a TA mechanism.

To achieve the foregoing objective, this application provides the following technical solutions.

According to a first aspect of this application, a processing method for a time advance TA is provided, and the method is applied to a terminal. The terminal is in a low-speed moving state. Low-speed moving includes moving with moving speed in a first speed range. The method includes: receiving a first message that is sent by a base station and that indicates a first TA; receiving, after the first message is received, a second message that is sent by the base station and that indicates a second TA; and in response to satisfying a first condition, sending an uplink signal by using the first TA to obtain an uplink transmission bit error rate satisfying a requirement. Satisfying the requirement includes: being less than a bit error rate threshold. The first condition includes: An absolute difference between the first TA and the second TA is greater than a difference threshold. Satisfying the first condition indicates that there is a possibility that the second TA is abnormal. Therefore, the first TA instead of the second TA is used to send uplink information, to obtain the uplink transmission bit error rate satisfying a requirement.

In some implementations, the first condition further includes: Estimated speed is greater than actual speed. The estimated speed is obtained based on the first message and the second message, and the actual speed is obtained based on sensor data collected by a sensor on the terminal. The estimated speed being greater than the actual speed indicates that there is a possibility that a TA indicated by the base station is abnormal. Therefore, based on a condition that the estimated speed is greater than the actual speed, accuracy of determining whether the second TA is abnormal can be improved.

In some implementations, a procedure of determining that the first condition is satisfied includes: determining, when the first message and the second message are messages sent in a same cell, whether the first condition is satisfied. When the first message and the second message are messages sent in the same cell, if the absolute difference is large, there is a possibility that the second TA is abnormal. Therefore, determining whether the messages are sent in the same cell can further improve accuracy of determining whether the second TA is abnormal.

In some implementations, the first message indicates a first time offset, the second message indicates a second time offset, the first time offset is used for generating the first TA, and the second time offset is used for generating the second TA. The procedure of determining that the first condition is satisfied includes: determining, when an absolute difference between the first time offset and the second time offset is not equal to 0, whether the first condition is satisfied. The absolute difference between the first time offset and the second time offset being equal to 0 indicates that the TA indicated by the second message is the same as the TA indicated by the first message. Because of a machine that a TA stored in the terminal is a TA indicated by a message received latest time (that is, last time), even if a TA indicated by a message received this time is inaccurate (that is, incorrect), the TA cannot be replaced with a correct TA. Therefore, it is unnecessary to determine whether the first condition is satisfied, to save a resource.

In some implementations, the first message and/or the second message include/includes: a TAC.

According to a second aspect of this application, a processing method for a TA is provided, and the method is applied to a terminal. The terminal is in a low-speed moving state. Low-speed moving includes moving with moving speed less than a speed threshold. The method includes: receiving, a plurality of times, messages sent by a base station, where the messages received the plurality of times includes a first message and a second message received after the first message, the first message indicates a first TA, and the second message indicates a second TA; and in response to satisfying a first condition, sending an uplink signal by using the first TA, to obtain an uplink transmission bit error rate satisfying a requirement, where satisfying the requirement includes: being less than a first bit error rate threshold, and the first condition includes: Estimated speed is greater than actual speed. The estimated speed is obtained based on the first message and the second message, and the actual speed is obtained based on sensor data collected by a sensor on the terminal. Messages received within a period of time is used as a determining basis to determine whether a TA is incorrect. This means that a relationship between TAs indicated by continuously received messages is introduced as a determining basis. Therefore, whether the TA is incorrect can be determined more accurately.

In some implementations, the first condition further includes: The uplink transmission bit error rate is greater than a second bit error rate threshold. When the uplink transmission bit error rate is not greater than the second bit error rate threshold, it indicates that there is a possibility that the second TA has no abnormality, and a subsequent processing step for an abnormality of a TA does not need to be performed, to save a resource.

In some implementations, the first message and the second message are continuously received messages, and the first message is a previously received message. The first message indicates a first time offset, the first time offset is used for generating the first TA, the second message indicates a second time offset, and the second time offset is used for generating the second TA. A procedure of determining that the first condition is satisfied includes: determining, when a result of subtracting the first time offset from the second time offset is greater than or equal to a difference threshold, whether the first condition is satisfied. The result obtained by subtracting the first time offset from the second time offset being less than the difference threshold indicates that TAs indicated by messages received before and after possibly manifest a trend of oscillatory variation represented by a zigzag curve, rather than being of an anomaly. Therefore, the first condition does not need to be determined, to save a resource.

In some implementations, the first message and the second message are continuously received messages. The first message indicates the first time offset, the first time offset is used for generating the first TA, the second message indicates the second time offset, and the second time offset is used for generating the second TA. The procedure of determining that the first condition is satisfied includes: determining, when an absolute difference between the first time offset and the second time offset is not equal to 0, whether the first condition is satisfied. An absolute difference between the first time offset and the second time offset being equal to 0 indicates that the TA indicated by the second message (a message received this time) is the same as the TA indicated by the first message (a message received last time). Because of a mechanism that a TA stored in the terminal is the TA indicated by the message received latest time, even if the TA indicated by the message received this time is inaccurate (that is, incorrect), the TA cannot be replaced with a correct TA. Therefore, it is unnecessary to determine whether the first condition is satisfied, to save a resource.

In some implementations, the first message and the second message are continuously received messages. The procedure of determining that the first condition is satisfied includes: determining, when the first message and the second message are messages sent in a same cell, whether the first condition is satisfied. When the first message and the second message are messages sent in the same cell, if the absolute difference is large, there is a possibility that the second TA is abnormal. Therefore, determining whether the messages are sent in the same cell can further improve accuracy of determining whether the second TA is abnormal.

In some implementations, the sending an uplink signal by using the first TA includes: sending, when the terminal has performed an access procedure again, the uplink signal by using the first TA. Performing the access procedure again includes performing an access procedure again on a first cell after an initial random access procedure is performed on the first cell. The terminal having performed the access procedure again after the initial access procedure indicates that the correct TA cannot be obtained either in the access procedure. Therefore, a latest TA, that is, the first TA, before a TA that is determined as anomaly is used to send the uplink signal, to obtain correct uplink synchronization as much as possible.

In some implementations, the method according to the second aspect further includes: initiating an access procedure on the first cell when the terminal does not perform the access procedure again; and in response to that the access procedure succeeds, obtaining a third TA, so as to obtain the correct uplink synchronization through access.

In some implementations, the method according to the second aspect further includes: in response to that the access procedure fails, triggering a redirection procedure; and after a second cell is redirected to by using the redirection procedure, obtaining a fourth TA by using an access procedure on the second cell, to obtain the correct uplink synchronization as much as possible.

In some implementations, the method according to the second aspect further includes: in response to that the access procedure fails, marking the first cell as an abnormal cell, to reduce a possibility of uplink synchronization abnormality caused by accessing the abnormal cell again in the future.

According to a third aspect in this application, an electronic device is provided, including: a memory and at least one processor. The memory is configured to store an application, and the at least one processor is configured to execute the application, to implement the processing method for a TA according to the first aspect or the second aspect in this application.

According to a fourth aspect in this application, a computer storage medium is provided, configured to store a computer program. When the computer program is executed, the processing method for a TA according to the first aspect or the second aspect in this application is implemented.

According to a fifth aspect in this application, a chip is provided, including a modem modem. The modem is configured to run the processing method for a TA according to the first aspect or the second aspect in this application.

According to a sixth aspect in this application, a computer program product is provided. When the computer program product is run on a computer, the computer is enabled to perform the processing method for a TA according to the first aspect or the second aspect in this application.

### BRIEF DESCRIPTION OF DRAWINGS

FIG. 1 is a diagram of an example of time synchronization of an uplink signal received by a base station;
FIG. 2 is a flowchart of a processing method for a TA according to an embodiment of this application;
FIG. 3 is a flowchart of another processing method for a TA according to an embodiment of this application; and
FIG. 4 is a diagram of an example of a structure of a terminal according to an embodiment of this application.

### DESCRIPTION OF EMBODIMENTS

The following clearly and completely describes technical solutions in embodiments of this application with reference to accompanying drawings in embodiments of this application. Terms used in the following embodiments are only intended to describe particular embodiments, and are not intended to limit this application. As used in the specification and the appended claims of this application, the singular expressions "a/an", "one", "said", "the foregoing", "the", and "this" are intended to include such expressions as "one or more", unless otherwise clearly indicated in the context. It should be further understood that, in embodiments of this application, "at least one" and "one or more" means one, two or more. "and/or" describes an association relationship between associated objects and represents that three relationships may exist. For example, A and/or B may represent: Only A exists, both A and B exist, and only B exists, where A and B may be singular or plural. The character "/" in this specification generally indicates an "or" relationship between the associated objects.

Reference to "one embodiment" or "some embodiments" described in this specification means that a specific characteristic, structure, or feature described in combination with this embodiment is included in one or more embodiments of this application. Therefore, statements such as "in one embodiment", "in some embodiments", "in some other embodiments", and "in some additional embodiments" in different places in this specification do not necessarily mean referring to a same embodiment. Instead, the statements mean "one or more but not all of embodiments", unless otherwise specifically emphasized in another manner. The terms "include", "contain", "have", and their variations mean "including but not limited to", unless otherwise specially emphasized in other ways.

A plurality of involved in embodiments of this application refers to two or more. It should be noted that, in descriptions of embodiments of this application, terms such as "first" and "second" are merely used for distinguishing descriptions, and cannot be understood as an indication or implication of relative importance, or an indication or implication of a sequence.

A time division duplexing (Time Division Duplexing, TDMA) radio frame (hereinafter referred to as a radio frame for short) used by a base station includes a downlink part and an uplink part. The downlink part is used for the base station to send a downlink signal to a terminal, and the uplink part is used for the base station to receive an uplink signal sent by the terminal.

It may be understood that there is a requirement on time for the base station receiving an uplink signal. In other words, the base station needs to receive the uplink signal at specified time, for example, a start moment T of the uplink part.

Because it takes time to transmit a signal in space, to ensure that the base station receives the uplink signal at specified time, time at which the terminal sends the uplink signal to the base station needs to be determined based on a radio frame used by the base station and a transmission delay of the signal.

In addition, for a plurality of terminals, a signal of a terminal being farther from the base station indicates a larger transmission delay of the signal. If uplink signals of the plurality of terminals do not arrive at the base station within a same time range (for example, a cyclic prefix (Cyclic Prefix, CP)), orthogonality between uplink signals of different terminals may not be ensured, causing inter-code interference, and further affecting performance of uplink communication.

To resolve the foregoing problem, the base station needs to configure a timing advance (Timing Advance, TA) for a terminal. The TA specifies an advance of the terminal relative to transmit time of an uplink signal specified in a radio frame used by the base station. In actual application, the TA is an advance based on time at which the terminal receives the downlink signal. In other words, the terminal sends an uplink signal in advance of the TA at a moment at which the terminal receives the downlink signal, to ensure that the terminal receives the uplink signal at specified time of the uplink signal specified in the radio frame. In addition, the base station allocates different TAs to terminals with different distances from the base station, so that uplink signals of different terminals arrive at the base station basically within a same time range, reducing a possibility of inter-code interference.

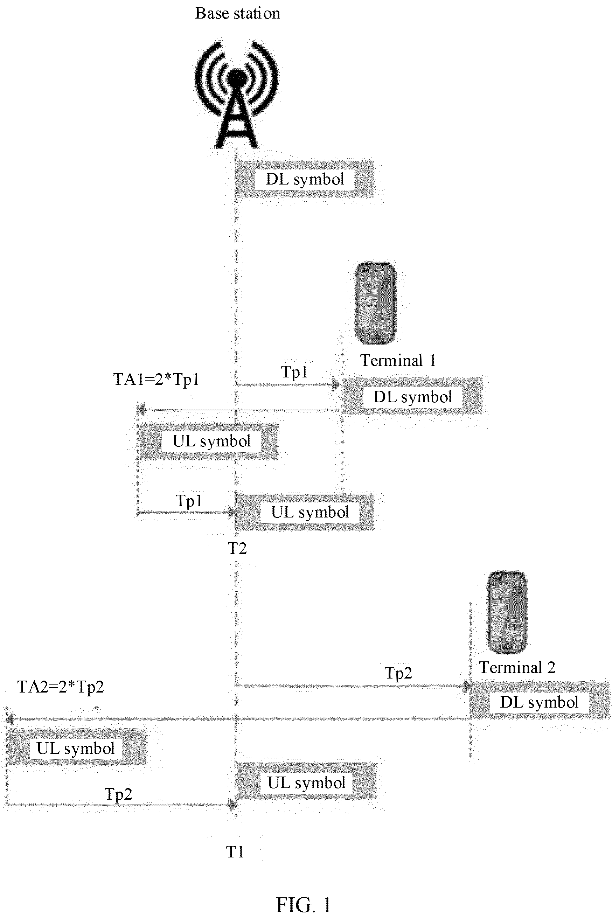

FIG. 1 is used as an example. A timeline T1 represents a moment at which a base station sends a downlink signal (DL symbol), and a timeline T2 represents a receiving moment of an uplink signal specified by a radio frame. In FIG. 1, T1=T2 is used as an example.

After transmission duration Tp1, the DL symbol is received by a terminal 1. To ensure that an uplink signal (UL symbol) arrives at the base station at a moment T2 specified by the base station, considering a delay of signal transmission, the terminal 1 sends the UL symbol in advance by TA1=2*Tp1 based on a moment at which the UL symbol is received. Based on TA1, that the base station receives the UL symbol of the terminal 1 at T2 can be ensured.

Compared with the terminal 1, a terminal 2 is farther from the base station. Assuming that a delay required for transmitting the UL symbol from the base station to the terminal 2 is Tp2, the terminal 2 sends the UL symbol in advance by TA2=2*Tp2 before a moment at which the UL symbol is received, and based on TA 2, that the base station receives the UL symbol of the terminal 1 at T2 can be ensured. In addition, it may be understood that based on TA1 and TA2, that respective UL symbols of TA1 and TA2 arrive at the base station at the same time can be ensured, in other words, moments at which the base station receives the UL symbols can be aligned.

In other words, based on FIG. 1, from a terminal side, the TA is essentially a negative offset (Negative offset) between a start moment at which a downlink sub-frame is received and a moment at which an uplink sub-frame is transmitted. The base station may control, by appropriately controlling time offsets of terminals, that moments at which uplink signals from different terminals arrive are basically aligned. For a terminal farther from the base station, due to a large transmission delay, it is necessary to send uplink data earlier than a terminal close to the base station. In addition, it may be learned from FIG. 1 that a moment at which the base station receives an uplink symbol is the same as a moment at which the base station sends a downlink symbol, and a moment at which the terminal sends an uplink symbol is offset from a moment at which the terminal receives a downlink symbol. It may be further learned from FIG. 1 that different terminals have different respective TA values. That is, the TA values are configurations at a terminal level. The TA is also referred to as round trip time (round trip time, RTT).

The following describes an example of a manner in which the base station configures the TA for the terminal.

In a procedure in which the terminal initially accesses the base station, the terminal sends a preamble (preamble) sequence to the base station in a first step of the access procedure. The base station obtains an initial TA by measuring the preamble, and in a second step of the access procedure, sends the initial TA to the terminal by using a timing advance command (Timing Advance Command, TAC) field (where for example, a length of the field is 12 bits in an NR standard, and 11 bits in an LTE standard) in an access response (RAR) message (that is, a message 2).

The terminal sends an uplink signal to the base station based on the initial TA in the TAC. In other words, the terminal obtains the initial TA during initial access to the base station.

After the terminal accesses the base station, due to reasons such as high-speed movement of the terminal (for example, the terminal is located on a running high-speed railway), handover of a transmission path between the terminal and the base station (for example, a user carries the terminal to a corner of a building in a city with a dense quantity of buildings), uplink timing error caused by accumulation of a long-time offset of crystal oscillator of the terminal, and a Doppler frequency shift caused by movement of the terminal, a delay when an uplink signal arrives at the base station may change, to be specific, the terminal changes from an uplink synchronous state to an uplink out-of-synchronization state.

Therefore, to enable the terminal and the base station to maintain an uplink synchronization state, the base station measures a moment at which the terminal sends the uplink signal (which includes, but is not limited to, a sounding reference signal (Sounding Reference Signal, SRS), a channel quality indicator (Channel Quality Indicator, CRC), a hybrid automatic repeat request (Hybrid Automatic Repeat-reques, HARQ), a physical uplink shared channel (Physical Uplink Shared Channel, PUSCH), and the like), updates the TA, and sends an updated TA to the terminal at an appropriate occasion. This process is referred to as an uplink synchronization update process.

The uplink synchronization update process includes: The base station sends a TAC MAC control element (MAC control element, TAC MAC CE) to the terminal. The terminal has already stored a latest time advance adjustment value NTAold (where NTA is a variable carried by the RAR or the MAC CE), and calculates a latest advance adjustment value NTAnew after receiving the TAC MAC CE.

In other words, the TA obtained by the terminal through the initial random access procedure may be considered as an absolute value, that is, a TA value. An adjustment value (a time offset) is obtained through the uplink synchronization update procedure, and the TA value is adjusted based on the adjustment value (the time offset), to obtain a new TA value. In either case, it may be understood that a message delivered by the base station, for example, the TAC, indicates the TA.

It may be understood that the above is a mechanism used by the base station to ensure an uplink synchronization state of the terminal. The mechanism used by the terminal to ensure the uplink synchronization state is: The base station configures a timing threshold for the terminal to represent a validity period of the TA (for example, a time alignment timer (TimeAlignmentTimer)). Each time the terminal receives the TA, the terminal resets the time alignment timer to 0. After duration of the time alignment timer exceeds a timer threshold, it indicates that the terminal does not receive the TA for a long time, and the TA recorded by the terminal has expired, so that it is not suitable to use the TA to transmit the uplink signal. Therefore, the procedure of accessing the base station needs to be performed again, to obtain the initial TA again.

During research, an inventor finds that the foregoing mechanism used by the base station and the terminal can ensure the uplink synchronization state between the terminal and the base station, but cannot prevent the base station from delivering an incorrect TA.

When the base station incorrectly calculates the TA due to some reasons (for example, an incompatibility problem caused by an upgrade of the base station and/or the terminal), the terminal receives the incorrect TA and sends the uplink signal by using the incorrect TA. This may destroy orthogonality of uplink transmission, cause intra-cell (intra-cell) interference, further cause a high uplink transmission bit error rate, and affect effective data transmission (for example, frame freezing or even dropped call).

To resolve a problem of a high uplink bit error rate caused by that the terminal does not receive a correct TA, embodiments of this application provide a processing method for a TA and an apparatus, to identify an abnormal (that is, incorrect) TA, and process the abnormal TA, preventing the terminal from using the abnormal TA.

The processing method for a TA disclosed in embodiments of this application may be applied to but is not limited to the following scenarios.

The base station and the terminal are devices in a long term evolution (Long Term Evolution, LTE) system, an LTE time division duplex (Time Division Duplex, TDD) system, an LTE-advanced (LTE-Advanced, LTE-A) system, a fifth generation mobile communication system (Fifth Generation Mobile Communication Systems, 5G), or a 5G New Radio (5G New Radio, 5G NR, and NR for short).

The base station is a wireless device in the foregoing communication system, and may also be referred to as a next generation node (the next Generation Node, gNB).

The terminal may also be referred to as a terminal device (Terminal Equipment), user equipment (User Equipment, UE), a mobile station (Mobile Station, MS), a mobile terminal (Mobile Terminal), or the like.

In addition to being applied to a single sub-carrier scenario, the method according to this embodiment is also applied to a carrier aggregation scenario. In the carrier aggregation scenario, different carriers (which includes one primary carrier, and remaining is a secondary carrier) supported by the terminal are allowed to have different TA values. For the scenario, a concept of a timing advance group (Timing Advance Group, TAG) is introduced. One TAG may include a TA of one or more serving cells. The one or more serving cells have a same TA. If the TAG includes only a TA of a primary cell (Pcell), the TAG is referred to as a primary timing advance group. If the TAG includes only a TA of a secondary cell, the TAG is referred to as a secondary timing advance group (sTAG). In an Rel 11 standard, limited by a radio frequency, a maximum of two downlink carriers are allowed in carrier aggregation. Therefore, there are only two TAGs at most. The concept of the TAG is used in the NR. For the carrier aggregation scenario, the following procedures may be performed on one cell by one.

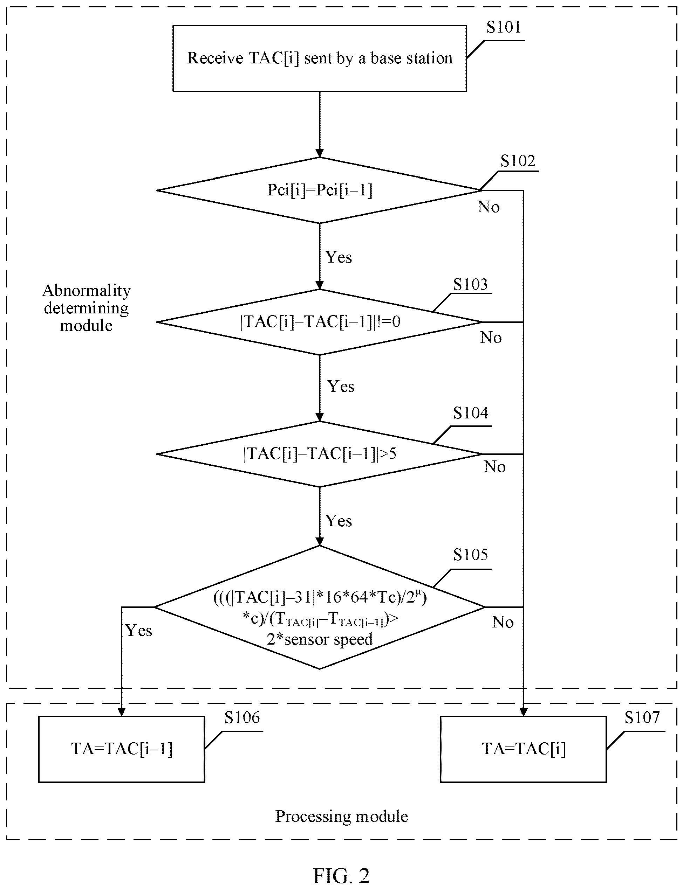

To process the abnormal TA, in embodiments of this application, update logic of a baseband processor of the terminal for the TA is improved. It may be understood that the baseband processor includes a modem (modem). In this embodiment, the modem performs the processing method for a TA shown in FIG. 2. FIG. 2 includes the following steps.

S101: Receive TAC[i] sent by a base station. TAC[i] is an i^{th} TAC received by a terminal, where i is a value greater than or equal to 0.

If i is greater than 0, it indicates that before the procedure shown in FIG. 2 is performed, uplink synchronization has been established between the terminal and the base station. In other words, the base station delivers a TAC to the terminal at least once, and the terminal has stored an NTAold. If i is equal to 0, it indicates that TAC[i] is a TAC received by the terminal in a current cell for the first time.

As described above, the TA obtained by the terminal through the initial random access procedure is the absolute value, and the TAC obtained after the initial access indicates the time offset. For ease of description, if the TAC is a TAC delivered in the initial random access procedure, a TA indicated by the TAC is an absolute TA. If the TAC is a TAC delivered after the initial random access procedure, a TA indicated by the TAC is a TA adjusted based on the time offset.

S102: Determine whether Pci[i]=Pci[i-1] is established.

Pci[i] is a cell in which the terminal is located when TAC[i] is received, and Pci[i-1] is a cell in which the terminal is located when TAC[i-1] is received. Pci[i]=Pci[i-1] indicates that Pci[i] is equal to Pci[i-1].

If the cell in which the terminal is located is changed (that is, not a same cell), the TA needs to be updated, and a TA after the cell is changed may be greatly different from the TA stored in the terminal. Therefore, the NTAold stored last time in the terminal cannot be used. When Pci[i] is not equal to Pci[i-1] (in other words, a determining result is no), the TA is updated based on an existing standard (logic), in other words, S107 is performed. When the determining result is yes, S103 is performed.

S103: Determine whether |TAC[i]-TAC[i-1]|!=0 is established.

|TAC[i]-TAC[i-1]|!=0 indicates that an absolute difference between TAC[i] and TAC[i-1] is not equal to 0.

If the absolute difference between TAC[i] and TAC[i-1] is equal to 0, it indicates that a TA indicated by a TAC received this time is the same as a TA indicated by a TAC received last time. Because of a mechanism that the TA stored in the terminal is the TA indicated by the TAC received last time (that is, last time), even if the TA indicated by the TAC received this time is inaccurate (that is, incorrect), the TA cannot be replaced with a correct TA. Therefore, it is unnecessary to perform subsequent steps. In other words, if a determining result is no, S107 is performed. If the determining result is yes, S104 is performed.

S104: Determine whether |TAC[i]-TAC[i-1]|>5 is established.

|TAC[i]-TAC[i-1]| represents an absolute difference between a TAindicated by the base station last time and a TA indicated by the base station this time. If the absolute difference between TAC[i] and TAC[i-1] is excessively large, it indicates that the TA indicated this time may be incorrect.

It may be understood that 5 is an example of a threshold indicating that an absolute difference is excessively large. The threshold indicating that the absolute difference is excessively large in this step is referred to as a first threshold. The first threshold may be set based on experience and is preconfigured in the terminal.

In some implementations, when the terminal is in a low-speed moving state, a range of the first threshold is [3, 6]. In some other implementations, when the terminal is in a high-speed moving state, a range of the first threshold is [7, 20]. The low-speed moving state may be understood as a state in which moving speed is in a first speed range, for example, the user carries the terminal while walking or being stationary. The high-speed moving state may be understood as a state in which moving speed is in a second speed range, for example, the user carries the terminal on a high-speed railway. The first speed range and the second speed range may be configured as required.

It may be understood that, if the absolute difference between TAC[i] and TAC[i-1] is less than the first threshold, it indicates that a difference between the TA indicated by the base station last time and the TA indicated by the base station this time is small, and it is more likely that the TA indicated by TAC[i] is correct. Therefore, when a determining result of S104 is yes, S105 is performed. When the determining result of S104 is no, S107 is performed.

S105: Determine whether (((|TAC[i]-31|*16*64*Tc)/2µ)*c)/(TTAC[i]-TTAC[i-1])>2*sensor speed is established.

TTAC[i] represents a moment at which the TAC is received for an i^{th} time. TTAC[i-1] represents a moment at which the TAC is received for an (i-1)^{th} time. TTAC[i]-TTAC[i-1] represents a time interval between the i^{th} time and the (i-1)^{th} time sending of the TAC. A sub-carrier spacing of the NR is extended based on 15 kHz of the LTE in powers of 2, µ represents a sub-carrier. Tc is a time unit in an NR system. (16*64*Tc)/2µ represents an actual adjustment amount, that is, a basic unit of TAC adjustment, indicated by a TAC for a system of which a sub-carrier spacing is 2µ*15 KHz. (|TAC[i]-31|*16*64)/2µ represents an absolute difference between TTAC[i] and TTAC[i-1]. It can be learned based on FIG. 1 that the absolute difference can represent a time offset before and after the terminal moves. c represents speed of light, that is, speed of electromagnetic wave transmission. Therefore, ((|TAC[i]-31|*16*64)/2µ)*c represents a distance traveled by the terminal in an interval between TTAC[i-1] and TTAC[i], and (((|TAC[i]-31|*16*64*Tc)/2µ)*c)/(TTAC[i]-TTAC[i-1]) represents moving speed of the terminal in the interval between TTAC[i-1] and TTAC[i].

The sensor speed is speed sensed by a speed sensor configured in the terminal, and represents the moving speed of the terminal.

(((|TAC[i]-31|*16*64)/2µ)*c)/(TTAC[i]-TTAC[i-1])>2*the sensor speed represents a difference between moving speed (estimated speed) of the terminal calculated based on the TAC and moving speed (which may be understood as actual speed of the terminal) of the terminal sensed by the sensor.

If a determining result of S105 is yes, it indicates that the moving speed of the terminal obtained based on the TAC is greater than the actual speed of the terminal, a difference is large (which may be understood as being much greater than), and there is a possibility that a TA indicated by TAC[i] is incorrect. Therefore, S106 is performed. If the determining result of S105 is no, it indicates that the moving speed of the terminal obtained based on the TAC is close to the actual moving speed of the terminal, and there is a possibility that the TA indicated by TAC[i] is correct. Therefore, S107 is performed.

It may be understood that the value 2 is merely an example, and is referred to as a coefficient threshold herein. The coefficient threshold may be preconfigured in the terminal, and a value of a coefficient range is related to a type of the terminal. In some implementations, when the terminal is a terminal of a type carried by the user such as a mobile phone or a watch, low-speed moving is normal, and an example of a value range of the coefficient threshold is [3, 6]. In some other implementations, when the terminal is a locomotive, high-speed moving is normal, and an example of the value range of the coefficient threshold is [7, 20]. S106: Use a TA indicated by TAC[i-1] as a latest TA, that is, TA=TAC[i-1].

Because the TA indicated by TAC[i-1] has been stored in the terminal, in some implementations, a processing module discards the TA indicated by TAC[i]. In addition, the stored TA is not processed.

It may be understood that TA=TAC[i-1] indicates that the TA indicated by TAC[i-1] is used as the latest TA. In some cases, it may be possible that TAC[i-1] carries an offset, and the TA indicated by TAC[i-1] may be understood as a TA calculated based on the existing TA and the offset.

S107: Use the TA indicated by TAC[i] as a latest TA, that is, TA=TAC[i].

It may be learned from the procedure shown in FIG. 2, an abnormality determining module determines, based on a preconfigured condition, whether a TA indicated by the latest received TAC is correct. If it is determined that the TA indicated by the latest received TAC is incorrect, the processing module uses a TA indicated by a TAC received last time as the latest TA, to resolve a problem of a high uplink transmission bit error rate caused by an incorrect TA.

It may be understood that, if the terminal is in a high-speed moving state (where the moving speed is within the second speed range), there is a possibility that a change in TAs delivered by the base station twice before and after is quite large. However, if the terminal is not in the high-speed moving state (where low-speed moving includes being stationary, and the moving speed is within the first speed range), and a change in TAs delivered by the base station twice before and after is quite large, there is a possibility that a TA is incorrectly calculated. In this case, uplink transmission of the terminal undergoes a high bit error rate. S105 in the procedure shown in FIG. 2 is set based on the foregoing principle, and a processing manner of S106 is beneficial to reducing the uplink transmission bit error rate of the terminal.

An objective of S102 to S104 shown in FIG. 2 is to qualitatively determine, from a plurality of dimensions, a possibility of an incorrect TA received latest time. If the possibility is not great, the procedure ends, to save a resource. In addition, it may be understood that a determining condition of S103 falls within a scope of a determining condition of S104. Therefore, S103 and S104 may be combined as S104. Therefore, S102 to S104 are optional steps.

In conclusion, the procedure shown in FIG. 2 may be summarized as follows. When the terminal moves at a low speed (in other words, the moving speed is within the first speed range, for example, staying indoors or walking), the terminal determines that an absolute difference between the TA indicated by TAC[i] and the TA indicated by TAC[i-1] that are delivered by the base station is greater than a difference threshold. In this case, the terminal transmits an uplink signal by using the TA indicated by TAC[i-1], so that the uplink transmission bit error rate is less than an uplink bit error rate threshold.

In some implementations, runnable software modules, an abnormality determining module and a processing module, are configured in the modem. S101 to S105 shown in FIG. 2 are performed by the abnormality determining module, and S106 and S107 are performed by the processing module.

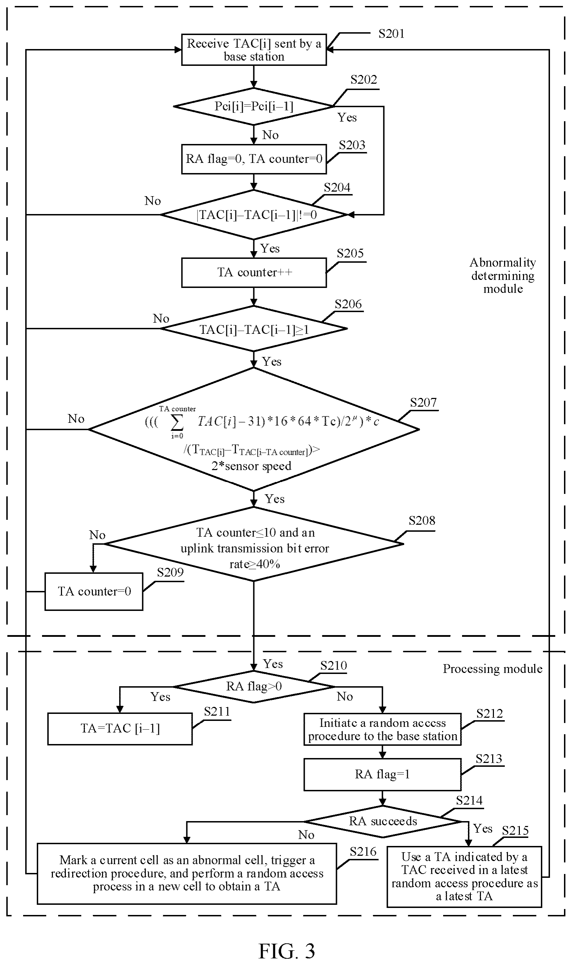

FIG. 3 shows another processing method for a TA, and differs from the procedure shown in FIG. 2 mainly in that whether a TA is abnormal is determined from TACs received a plurality of consecutive times, in other words, a scenario in which consecutive TACs indicate an incorrect TA can be identified and processed.

To be specific, in a same cell, the following determining is performed on TACs delivered by a base station for last 10 consecutive times. First, if there is a change in a TA compared with a last TA, moving speed V1 of a terminal is calculated by using an absolute difference between a TA indicated by a currently delivered TAC and a first TA starting to be counted. V1 is compared with V2 that is twice speed obtained by a sensor of the terminal. If V1 is less than V2, it is considered that the change in the TAs is caused by high-speed movement of the terminal. The TA is updated to a TA indicated by a latest TAC, and a new TAC continues to be received. If V1 is greater than V2, and in this case, an uplink transmission bit error rate is greater than 40%, it is considered that a TA indicated by a latest TAC delivered by the base station is an abnormal value. In other words, if an uplink signal is sent by using the TA indicated by the latest delivered TAC, orthogonality of the uplink transmission is destroyed, and intra-cell interference is caused. In this case, UE initiates random access to perform uplink synchronization. If the random access succeeds, the foregoing abnormality determining is continued. If an abnormality is no longer detected, it is considered that the uplink synchronization is successfully restored. If the random access fails, redirection is triggered to access a new cell after a current cell is added to a black cell. If the abnormality is still detected after the random access, the terminal uses a TAC when the abnormality is detected latest time as a time advance of sending an uplink frame, and discards all TACs received after this time.

An implementation based on the foregoing guidance is shown in FIG. 3, and a procedure shown in FIG. 3 includes the following steps.

S201: Receive TAC[i] sent by the base station. For details, refer to S101.

S202: Determine whether Pci[i]=Pci[i-1] is established. If Pci[i]=Pci[i-1] is established, S204 is performed. If Pci[i]=Pci[i-1] is not established, S203 is performed.

For S202, refer to S102.

S203: Set an identifier of the random access (RA) to 0 (RA flag=0), and set a value of a TA counter to 0 (TA counter=0).

The identifier of the RA indicates whether a random access in addition to an initial random access is performed in the current cell again. It may be understood that when a determining result of S202 is yes, it indicates that the terminal performs at least one access in addition to the initial access, so that the identifier of the RA is set to 1; or when a determining result of S202 is no, the identifier of the RA is set to 0.

It may be understood that, with reference to logic for jumping to perform S203 from S202, before S203, the terminal has not performed the random access in the current cell. Therefore, the identifier of the RA is set to 0.

An objective of the TA counter is to count a quantity of received TACs, to determine, based on the TACs received the plurality of consecutive times, whether the TA indicated by the latest received TAC is abnormal.

An initial value of the TA counter is 0. For ease of description, the value of the TA counter is recorded as TA counter.

S204: Determine whether |TAC[i]-TAC[i-1]|!=0 is established. If |TAC[i]-TAC[i-1]|!=0 is established, S205 is performed. If |TAC[i]-TAC[i-1]|!=0 is not established, S209 is performed.

For S204, refer to S103.

S205: Add 1 to the TA counter (TA counter++).

It may be known that, with reference to S205 and S203, starting from S206, a step of determining, based on the TACs received the plurality of consecutive times (where in this embodiment, 10 times is used as an example), whether a TA indicated by the base station is incorrect is used. An objective of S204 is to: If TAs indicated by TACs received two consecutive times are the same, it indicates that there is a high possibility that the TA is not incorrect. Therefore, the TA is not used as a basis for subsequent determining, and subsequent determining is not performed, to save a resource and reduce power consumption. It may be understood that S204 may not be performed.

S206: Determine whether TAC[i]-TAC[i-1]≥1 is established. If TAC[i]-TAC[i-1]≥1 is not established, S209 is performed. If TAC[i]-TAC[i-1]≥1 is established, S207 is performed.

TAC[i]-TAC[i-1] represents a difference between a TA indicated by the base station for an (i-1)^{th} time and a TA indicated by the base station for an i^{th} time. If the difference between TAC[i] and TAC[i-1] is less than 1, it indicates that TAs indicated by two TACs received before and after are reduced. The TAs indicated by the TACs received before and after possibly manifest a trend of oscillatory variation represented by a zigzag curve, and it indicates that there is a possibility that the TA indicated for the i^{th} time is not incorrect compared with the TA indicated for the (i-1)^{th} time. Therefore, when a determining result of S206 is yes, S207 is performed, or when the determining result of S206 is no, S209 is performed.

It may be understood that 1 is an example for representing a difference threshold. The difference threshold in this step is referred to as a second threshold. The second threshold may be set based on experience and is preconfigured in the terminal.

It may be understood that, in this embodiment, whether the TA is abnormal is determined based on the TACs received the plurality of times. Therefore, the second threshold is less than a first threshold, and an ideal determining result can also be obtained.

In some implementations, a range of the second threshold is [1, 3].

S207: Determine whether /(TTAC[i]-TTAC[i-TA counter])>2*sensor speed is established. If /(TTAC[i]-TTAC[i-TA counter])>2*sensor speed is established, S208 is performed. If /(TTAC[i]-TTAC[i-TA counter])>2*sensor speed is not established, S209 is performed.

Refer to S105. It may be understood that /(TTAC[i]-TTAC[i-TA counter])>2*the sensor speed represents the difference between the moving speed of the terminal calculated based on the TAC and the moving speed (which may be understood as the actual speed of the terminal) of the terminal sensed by the sensor.

If a determining result of S207 is yes, it indicates that moving speed of the terminal obtained based on the TAC is greater than actual speed of the terminal, and a difference is large (which may be understood as being much greater than). Therefore, there is a possibility that the TA indicated by TAC[i] is incorrect. Therefore, S208 is performed.

If the determining result of S207 is no, it indicates that the moving speed of the terminal obtained based on the TAC is close to the actual moving speed of the terminal. Therefore, there is a high possibility that the TA indicated by TAC[i] is correct. Therefore, S209 is performed.

In addition, it may be understood that, in a determining manner in S207, an error of TAs that are indicated by the TACs received the plurality of consecutive times (for example, the TACs received 10 times) within a period of time and that increase in a continuous linear curve or a step-type curve can be determined, and a case of zigzag jitter of a TAC value can be filtered out.

S208: Determine whether TA counter≤10 and an uplink transmission bit error rate≥40% are established. If TA counter≤10 and an uplink transmission bit error rate≥40% are established, S210 is performed. If TA counter≤10 and the uplink transmission bit error rate≥40% are not established, S209 is performed.

TA counter≤10 indicates that the TACs received within 10 times are used as a determining basis. It may be understood that 10 is merely an example, and is referred to as a time quantity threshold herein. An example of a value range of the time quantity threshold is [8, 30].

The uplink transmission bit error rate≥40% indicates that the uplink transmission bit error rate is high. It may be understood that 40% is merely an example, and is referred to as a bit error rate threshold herein. An example of a value range of the bit error rate threshold is [20%, 40%].

As described above, when the determining result of S207 is yes, an error of the TAs that increase in a continuous linear curve or a step-type curve can be determined. However, during research, the inventor finds that an error of the TAs that increase in a continuous form within a period of time may not affect uplink transmission. Therefore, this case can be excluded in S208, to save a resource. It may be understood that a determining condition of the bit error rate is an optional condition, or the bit error rate may not be determined.

If a determining result of S208 is yes, it indicates that the TA indicated by the latest received TAC is determined to be abnormal based on TACs received the plurality of times, and S210 is performed. If the determining result of S208 is no, it indicates that TACs are not determined a preset quantity of times, or the bit error rate is not high, and S209 is performed.

S209: Set the TA counter to 0 (TA counter=0), and after S209, S201 is performed again.

S210: Determine whether the identifier of the RA is 0. If the identifier of the RA is 0, S211 is performed. If the identifier of the RA is not 0, S212 is performed.

S211: Use the TA indicated by TAC[i-1] as a latest TA, that is, TA=TAC[i-1], and discard TAC[i].

For details, refer to S106.

S212: Initiate a random access procedure to the base station.

After the TA is persistently abnormal, it may be considered that the UE and a base station side are out-of-synchronization. In some implementations, the random access procedure is a non-synchronized type of random access procedure specified in a protocol.

It may be understood that, after the random access procedure ends, the terminal obtains the TA, that is, establishes uplink synchronization with the base station again.

S213: Set the identifier of the RA to 1 (RA flag=1).

S214: Determine whether the random access procedure succeeds. If the random access procedure succeeds, S215 is performed. If the random access procedure fails, S216 is performed.

If the random access procedure succeeds, it indicates that the uplink synchronization with the base station has been obtained. Therefore, S215 is performed.

S215: Use a TA indicated by a TAC received in a latest random access procedure as a latest TA.

It may be understood that, after S215, S201 is performed again, to persistently monitor whether the TA delivered by the base station is incorrect, and process in a timely manner if the TA delivered by the base station is incorrect. Because there is a high probability that the TA obtained in the random access procedure is correct, in S215, it can be ensured that the correct TA is obtained as soon as possible.

An alternative step of S215 is that after the TAC delivered in the latest random access procedure is received, the TA indicated by the TAC is recorded, and S201 is performed again. In other words, after it is determined that a current re-access is performed, continuously obtained TAs are correct. Otherwise, a TA obtained after a random access is performed again is not used, to fully ensure correctness of the TA.

S216: Mark a current cell as an abnormal cell, and trigger a redirection procedure.

In some implementations, the current cell is added to a blacklist, to mark the current cell as the abnormal cell.

The redirection procedure is used for reselecting a cell. After redirecting to a new cell, the terminal performs a random access procedure in the new cell, to obtain a TA.

In some implementations, after S216, S201 is performed again. It may be understood that, in a procedure of performing S210 again, after S201 to S210, because the random access is performed in S216, if a determining result of S210 is yes, S211 is performed. TAC[i-1] in S211 is a latest TAC before TAC[i] determined as abnormal TAC[i].

In some other implementations, after S216, S215 is performed, and after S215, S201 is performed again, to obtain a normal TA as soon as possible.

It may be known from S210 to S216 shown in FIG. 3 that, for processing of an abnormal TA, different processing manners are respectively performed based on a severity of a problem. For a case in which the random access in addition to the initial random access is not performed, a random access procedure is performed again, to obtain a TA. If the random access succeeds, the obtained TA is used as a latest TA. If the random access fails, it indicates that the problem is worse, and a new cell is redirected to. If a TA in the new cell is still incorrect, it indicates that the problem is further worse, and a TA before the TA determined as an incorrect TA is used as a latest TA.

In conclusion, in the procedure shown in FIG. 3, TACs received in a period of time (that is, the TACs received the plurality of times) are used as a determining basis to determine whether the TA is incorrect. This means that a relationship between offsets indicated by the TACs is introduced as a determining basis. Therefore, whether the TA is incorrect can be determined more accurately. In addition, after it is determined that the TA is incorrect, in addition to discarding the TAC, an access procedure and a redirection procedure can further be initiated, facilitating improving of a possibility of obtaining correct uplink synchronization.

It may be understood that S201 to S209 shown in FIG. 3 are performed by the abnormality determining module running in the modem, and S210 to S216 are performed by the processing module running in the modem.

The terminal to which the processing method for a TA described in the foregoing embodiments is applied may be an electronic device capable of supporting a call, such as a mobile phone, a tablet computer, a desktop or laptop notebook computer, an ultra-mobile personal computer (Ultra-mobile Personal Computer, UMPC), a handheld computer, a netbook, a personal digital assistant (Personal Digital Assistant, PDA), a wearable electronic device, or a smartwatch.

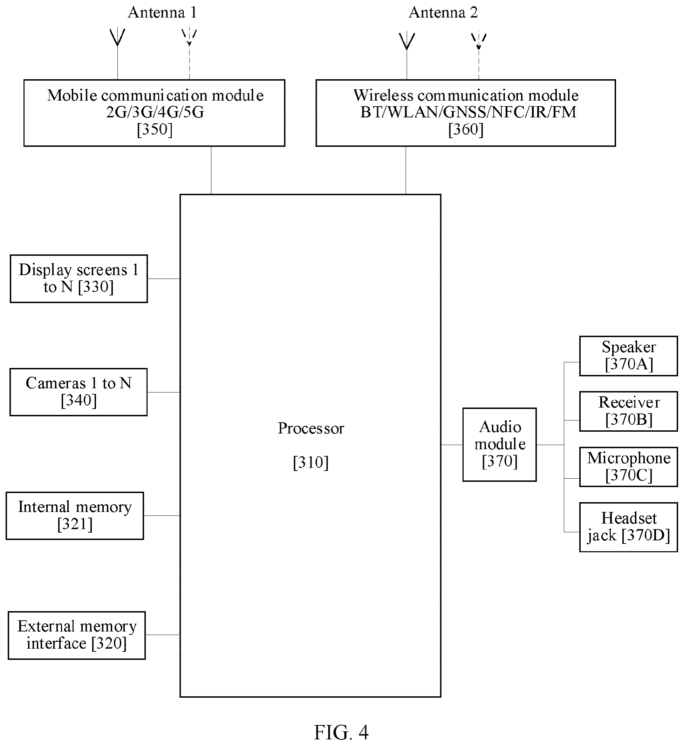

FIG. 4 shows an example of a structure of a terminal according to an embodiment of this application. A mobile phone is used as an example. The terminal includes a processor 310, an external memory interface 320, an internal memory 321, a display screen 330, a camera 340, an antenna 1, an antenna 2, a mobile communication module 350, a wireless communication module 360, and the like.

It may be understood that the structure shown in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

It may be understood that an interface connection relationship between the modules shown in this embodiment is merely an example for description, and does not constitute a limitation on the structure of the terminal. In some other embodiments of this application, the terminal may alternatively use an interface connection manner different from that in the foregoing embodiment, or use a combination of a plurality of interface connection manners.

The external memory interface 320 may be configured to be connected to an external storage card such as a Micro SD card, to expand a storage capability of the electronic device. The external storage card communicates with the processor 310 through the external memory interface 320, to implement a data storage function, such as storing music, a video, and another file in the external storage card.

The internal memory 321 may be configured to store computer-executable program code, and the executable program code includes instructions. The processor 310 runs the instructions stored in the internal memory 321, to perform various functional applications and data processing of the terminal. The internal memory 321 may include a program storage area and a data storage area. The program storage area may store an operating system, an application required by at least one function (for example, a sound playing function or an image playing function), and the like. The data storage area may store data (for example, audio data and an address book) and the like created when the electronic device is used. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321 and/or the instructions stored in the memory disposed in the processor, to implement various functional applications and data processing of the electronic device.

The electronic device implements a display function through the GPU, the display screen 330, the application processor, and the like. The GPU is a microprocessor for image processing and is connected to the display screen 330 and the application processor. The GPU is configured to perform mathematical and geometric calculation for graphics rendering. The processor 310 may include one or more GPUs that execute program instructions to generate or change display information.

The display screen 330 is configured to display an image, a video, and the like. The electronic device may implement a photographing function by using the ISP, the camera 340, the video codec, the GPU, the display screen 330, the application processor, and the like.

A wireless communication function of the electronic device may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may alternatively be multiplexed to improve antenna utilization. For example, the antenna 1 may be multiplexed into a diversity antenna of a wireless local area network. In some other embodiments, the antennas may be used in combination with a tuning switch.

The mobile communication module 350 may provide a solution applied to the electronic device for wireless communication such as 2G/3G/4G/5G. The mobile communication module 350 may include at least one filter, a switch, a power amplifier, a low noise amplifier (low noise amplifier, LNA), and the like. The mobile communication module 350 may receive an electromagnetic wave via the antenna 1, perform processing such as filtering and amplification on the received electromagnetic wave, and transmit the electromagnetic wave to the modem processor for demodulation. The mobile communication module 350 may further amplify a signal obtained after modulation by the modem processor, and convert the signal into an electromagnetic wave for radiation via the antenna 1. In some embodiments, at least some functional modules of the mobile communication module 350 may be disposed in the processor 310. In some embodiments, the at least some functional modules of the mobile communication module 350 and at least some modules of the processor 310 may be disposed in a same device.

In some embodiments, the electronic device initiates or receives a call request by using the mobile communication module 350 and the antenna 1.

The wireless communication module 360 may provide a solution applied to the electronic device for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 360 may be one or more devices integrating at least one communication processing module. The wireless communication module 360 receives an electromagnetic wave via the antenna 3, performs frequency modulation and filtering processing on the electromagnetic wave signal, and sends a processed signal to the processor 310. The wireless communication module 360 may further receive a to-be-transmitted signal from the processor 310, perform frequency modulation and amplification on the to-be-transmitted signal, and convert the to-be-transmitted signal into an electromagnetic wave for radiation via the antenna 2.

The terminal may implement an audio function by using an audio module 370, a speaker 370A, a receiver 370B, a microphone 370C, a headset jack 370D, the application processor, and the like, for example, implement a music playback function and a recording function.

## Claims

1. A processing method for a time advance TA, applied to a terminal, wherein the terminal is in a low-speed moving state, low-speed moving comprises moving speed in a first speed range, and the method comprises:
receiving a first message sent by a base station, wherein the first message indicates a first TA;
receiving a second message sent by the base station after the first message is received, wherein the second message indicates a second TA; and
in response to satisfying a first condition, sending an uplink signal by using the first TA, to obtain an uplink transmission bit error rate satisfying a requirement, wherein satisfying the requirement comprises: being less than a bit error rate threshold, and the first condition comprises: an absolute difference between the first TA and the second TA is greater than a difference threshold.

2. The method according to claim 1, wherein the first condition further comprises:
estimated speed is greater than actual speed, wherein the estimated speed is obtained based on the first message and the second message, and the actual speed is obtained based on sensor data collected by a sensor on the terminal.

3. The method according to claim 1 or 2, wherein a procedure of determining that the first condition is satisfied comprises:
determining, when the first message and the second message are messages sent in a same cell, whether the first condition is satisfied.

4. The method according to any one of claims 1 to 3, wherein the first message indicates a first time offset, the second message indicates a second time offset, the first time offset is used for generating the first TA, and the second time offset is used for generating the second TA; and
a procedure of determining that the first condition is satisfied comprises:
determining, when an absolute difference between the first time offset and the second time offset is not equal to 0, whether the first condition is satisfied.

5. The method according to any one of claims 1 to 3, wherein the first message and/or the second message comprise/comprises: a TAC.

6. A method for processing a TA, applied to a terminal, wherein the terminal is in a low-speed moving state, low-speed moving comprises moving with moving speed less than a speed threshold, and the method comprises:
receiving, a plurality of times, messages sent by a base station, wherein the messages received the plurality of times comprises a first message and a second message received after the first message, the first message indicates a first TA, and the second message indicates a second TA; and
in response to satisfying a first condition, sending an uplink signal by using the first TA, to obtain an uplink transmission bit error rate satisfying a requirement, wherein satisfying the requirement comprises: less than a first bit error rate threshold, and the first condition comprises: estimated speed is greater than actual speed, wherein the estimated speed is obtained based on the first message and the second message, and the actual speed is obtained based on sensor data collected by a sensor on the terminal.

7. The method according to claim 6, wherein the first condition further comprises: the uplink transmission bit error rate is greater than a second bit error rate threshold.

8. The method according to claim 6 or 7, wherein the first message and the second message are continuously received messages, and the first message is a previously received message;
the first message indicates a first time offset, the first time offset is used for generating the first TA, the second message indicates a second time offset, and the second time offset is used for generating the second TA; and
a procedure of determining that the first condition is satisfied comprises:
determining, when a result of subtracting the first time offset from the second time offset is greater than a difference threshold, whether the first condition is satisfied.

9. The method according to any one of claims 6 to 8, wherein the first message and the second message are the continuously received messages, the first message indicates the first time offset, the first time offset is used for generating the first TA, the second message indicates the second time offset, and the second time offset is used for generating the second TA; and
a procedure of determining that the first condition is satisfied comprises:
determining, when an absolute difference between the first time offset and the second time offset is not equal to 0, whether the first condition is satisfied.

10. The method according to any one of claims 6 to 9, wherein the first message and the second message are the continuously received messages; and
a procedure of determining that the first condition is satisfied comprises:
determining, when the first message and the second message are messages sent in a same cell, whether the first condition is satisfied.

11. The method according to any one of claims 1 to 10, wherein the sending an uplink signal by using the first TA comprises:
sending, when the terminal has performed an access procedure again, the uplink signal by using the first TA, wherein performing the access procedure again comprises performing an access procedure again on a first cell after an initial random access procedure is performed on the first cell.

12. The method according to claim 11, wherein the method further comprises:
initiating an access procedure on the first cell when the terminal does not perform the access procedure again; and
in response to that the access procedure succeeds, obtaining a third TA.

13. The method according to claim 12, wherein the method further comprises:
in response to that the access procedure fails, triggering a redirection procedure; and
after a second cell is redirected by using the redirection procedure, obtaining a fourth TA by using an access procedure on the second cell.

14. The method according to claim 12 or 13, wherein the method further comprises:
in response to that the access procedure fails, marking the first cell as an abnormal cell.

15. A terminal, comprising:
a memory and at least one processor, wherein the memory is configured to store an application, and the least one processor is configured to execute the application, to implement the processing method for a TA according to any one of claims 1 to 14.

16. A computer storage medium, configured to store a computer program, and the computer program, when being executed, implementing the processing method for a TA according to any one of claims 1 to 14.

17. A chip, comprising a modem modem, wherein the modem is configured to operate the method for processing a TA according to any one of claims 1 to 14.
